(19) Europäisches Patentamt
European Patent Office
Office européen des brevets

(11) **EP 4 517 953 A1**

(12) **EUROPEAN PATENT APPLICATION**
published in accordance with Art. 153(4) EPC

(43) Date of publication:
**05.03.2025 Bulletin 2025/10**

(21) Application number: **22939098.4**

(22) Date of filing: **28.04.2022**

(51) International Patent Classification (IPC):
**H01M 50/172** (2021.01)     **H01M 50/552** (2021.01)
**H01M 50/184** (2021.01)

(52) Cooperative Patent Classification (CPC):
**H01M 50/172; H01M 50/184; H01M 50/552**

(86) International application number:
**PCT/CN2022/089925**

(87) International publication number:
**WO 2023/206246 (02.11.2023 Gazette 2023/44)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Ningde Amperex Technology Limited
Ningde, Fujian 352100 (CN)**

(72) Inventors:
• **CHEN, Tengteng**
**Ningde, Fujian 352100 (CN)**
• **DENG, Daolin**
**Ningde, Fujian 352100 (CN)**
• **CHEN, Wen**
**Ningde, Fujian 352100 (CN)**
• **CHENG, Hao**
**Ningde, Fujian 352100 (CN)**

(74) Representative: **Icosa
83 avenue Denfert-Rochereau
75014 Paris (FR)**

(54) **ELECTROCHEMICAL APPARATUS AND ELECTRONIC DEVICE**

(57)     An electrochemical device includes a housing, a first sealing ring, and an electrode post. The housing includes a cover provided with a through-hole. The cover includes a first wall surface and a second wall surface. The first sealing ring includes a first annular surface and a second annular surface. The first annular surface connects to the first wall surface. The first sealing ring is disposed around a hole axis of the through-hole. The electrode post includes a first part and a second part. The first part is inserted into the through-hole. The second part is connected to an end portion of the first part, the end portion being located in the inner cavity of the housing. A third annular surface includes a first region connected to the second annular surface. The first region includes a first edge and a second edge.

FIG. 2

**Description**

**TECHNICAL FIELD**

This application relates to the technical field of batteries, and in particular, to an electrochemical device and an electronic device.

**BACKGROUND**

An electrode post of a steel-shell battery is typically fixed to a cover of the steel-shell battery by rivet-pressing. An insulation sealing gasket is sandwiched between the electrode post and the cover to implement hermetic insulation. However, during the formation by rivet-pressing, the insulation sealing gasket may slide and be dislocated, thereby resulting in a loose sealing surface, being prone to leakage at the sealing junction, and posing a safety hazard. On the other hand, in order to ensure hermeticity during rivet-pressing, a relatively large rivet pressure is usually applied. However, excessive rivet pressure is prone to cause the electrode post to turn outward, thereby affecting the sealing area. If the rivet pressure is overly small, the pressure on the sealing interface is small, thereby also impairing the sealing effect.

**SUMMARY**

This application is to provide an electrochemical device and an electronic device to improve at least the sealing effect of the electrochemical device.

According to a first aspect of this application, an electrochemical device is provided, including a housing, a first sealing ring, and an electrode post. The housing includes a cover provided with a through-hole. The cover includes a first wall surface and a second wall surface disposed opposite to each other. The first wall surface is facing toward an inner cavity of the housing. The first sealing ring includes a first annular surface and a second annular surface disposed opposite to each other. The first annular surface connects to the first wall surface. The first sealing ring is disposed around a hole axis of the through-hole. The electrode post includes a first part and a second part. The first part is inserted into the through-hole. The second part is connected to an end portion of the first part, the end portion being located in the inner cavity of the housing. The second part includes a third annular surface facing toward the first wall surface. The third annular surface includes a first region connected to the second annular surface. The first region includes a first edge and a second edge that are disposed opposite to each other. The second edge is farther away from the through-hole than the first edge. When viewed in a direction perpendicular to the hole axis of the through-hole, the second edge is located between the first edge and the second wall surface in a direction parallel to the hole axis.

When the electrode post is being rivet-pressed, the second edge can play a role in constraining and blocking the first sealing ring, thereby suppressing the sliding and dislocation of the first sealing ring. At the same time, the slope from the first edge to the second edge reduces the tangential rivet pressure parallel to the first region, and reduces the assembling sliding between the first sealing ring and the electrode post. Moreover, the slope from the first edge to the second edge suppresses the electrode post from being turned out, increasing the sealing area, and increasing the normal-direction rivet pressure perpendicular to the first region, thereby improving the sealing reliability.

In an improved technical solution based on the above technical solution, the first edge intersects a first plane at a first intersection point. The second edge intersects the first plane at a second intersection point. A straight line intersects the hole axis at a third intersection point, where the straight line passes through the first intersection point and the second intersection point. Along a direction of the hole axis, an angle between a line from the third intersection point to the through-hole and a line from the third intersection point to the second intersection point is $\alpha$, satisfying: $60° \leq \alpha \leq 88°$, and the first plane is a plane passing through the hole axis.

The first region is a slope, and the electrode post connects to the first sealing ring through the slope, thereby increasing the sealing region between the first sealing ring and the electrode post. In addition, the tangential force parallel to the first region and exerted on the first sealing ring is reduced, thereby effectively reducing the sliding and dislocation of the first sealing ring. Moreover, the normal force perpendicular to the first region and exerted on the first sealing ring is increased, and the pressure on a sealing interface between the first sealing ring and the electrode post is greater, thereby improving the reliability of sealing between the first sealing ring and the electrode post.

In an improved technical solution based on the above technical solution, the angle $\alpha$ satisfies: $75° \leq \alpha \leq 85°$. In this case, the first region has a greater inclination, thereby further suppressing the sliding and dislocation of the first sealing ring, reducing the tangential force parallel to the first region and exerted on the first sealing ring, and increasing the normal force perpendicular to the first region and exerted on the first sealing ring, thereby further improving the sealing reliability.

In an improved technical solution based on the above technical solution, the first wall surface includes a second region connected to the first annular surface. The second region includes a third edge and a fourth edge disposed opposite to each other. The fourth edge is farther away from the through-hole than the third edge. The third edge intersects the first plane at a fourth intersection point, the fourth edge intersects the first plane at a fifth intersection point, and an other straight line intersects the hole axis at a sixth intersection point, where the other straight line passes through the fourth intersection point and the fifth intersection point; along a direction of the hole axis, an angle between a line from the sixth intersection point to the through-hole and a line from the sixth intersection point to the fifth intersection point is $\beta$, satisfying: $60° \leq \beta \leq 88°$.

The second region is a slope, and the first sealing ring connects to the cover through the slope, thereby increasing the sealing area between the first sealing ring and the cover. In addition, the tangential force parallel to the second region and exerted on the first sealing ring is reduced, thereby effectively reducing the sliding and dislocation of the first sealing ring. Moreover, the normal force perpendicular to the second region and exerted on the first sealing ring is increased, and the pressure on a sealing interface between the first sealing ring and the cover is greater, thereby improving the reliability of sealing between the first sealing ring and the cover.

In an improved technical solution based on the above technical solution, the angle $\beta$ satisfies: $75° \leq \beta \leq 85°$. In this case, the second region has a greater inclination, thereby further suppressing the sliding and dislocation of the first sealing ring, reducing the tangential force parallel to the second region and exerted on the first sealing ring, and increasing the normal force perpendicular to the second region and exerted on the first sealing ring, thereby further improving the sealing reliability.

In an improved technical solution based on the above technical solution, the angles satisfy: $0.7 \times (90° - \alpha) \leq (90° - \beta) \leq 1.2 \times (90° - \alpha)$, that is, $(1.2\alpha - 18°) \leq \beta \leq (0.7\alpha + 27°)$. In this case, the inclinations of the first and second regions can be better matched, thereby increasing the pressure on the sealing interface between the first sealing ring and the electrode post as well as the sealing interface between the first sealing ring and the cover, and in turn, further improving the sealing reliability.

In an improved technical solution based on the above technical solution, the angles satisfies: $\alpha \leq \beta$, thereby further improving the sealing effect of the first sealing ring.

In an improved technical solution based on the above technical solution, the electrochemical device further includes a second sealing ring. The second sealing ring is sleeved around an end portion of the first part, the end portion facing away from the second part. The second sealing ring includes a fourth annular surface, and the second wall surface includes a third region connected to the fourth annular surface. The third region includes a fifth edge and a sixth edge that are disposed opposite to each other. The sixth edge is farther away from the through-hole than the fifth edge. The fifth edge intersects the first plane at a seventh intersection point. The sixth edge intersects the first plane at an eighth intersection point. An other straight line intersects the hole axis at a ninth intersection point, where the other straight line passes through the seventh intersection point and the eighth intersection point. Along a direction of the hole axis, an angle between a line from the ninth intersection point to the second sealing ring and a line from the ninth intersection point to the eighth intersection point is $\lambda$, satisfying: $60° \leq \lambda \leq 88°$.

The third region is a slope, and the second sealing ring connects to the cover through the slope, thereby increasing the sealing length between the second sealing ring and the cover, and in turn, increasing the sealing area between the second sealing ring and the cover. In addition, the tangential force parallel to the third region and exerted on the second sealing ring is reduced, and the normal force perpendicular to the third region is increased, thereby further improving the reliability of sealing between the second sealing ring and the cover.

In an improved technical solution based on the above technical solution, the first region is an annular region surrounding the hole axis. The first edge is an inner circle of the annular region. The second edge is an outer circle of the annular region. In this case, all the first region around the first part is upward inclined slopes. No matter in which direction the electrode post is bent and rivet-pressed, the second edge can constrain the first sealing ring.

In an improved technical solution based on the above technical solution, a cross-section of the third annular surface at the first plane includes a first line. The first line includes a first straight line segment. The first straight line segment connects the first intersection point and the first part. An angle between the first straight line segment and the hole axis is $\theta$, satisfying: $89° \leq \theta \leq 91°$. A length of the first line is L, and a length of the first straight line segment is A, satisfying: A $\leq 0.7L$. The sealing structure between the second part of the electrode post and the first sealing ring may be a pure-slope sealing structure or a plane plus slope sealing structure. The plane plus slope sealing structure can also play a role in constraining and blocking the first sealing ring, so as to suppress the sliding and dislocation of the first sealing ring. In addition, this sealing structure can also increase the sealing area between the first sealing ring, thereby ensuring good performance of sealing between the first sealing ring and the electrode post.

In an improved technical solution based on the above technical solution, the second part further includes a fourth region disposed opposite to the first region. The fourth region is facing toward the inner cavity of the housing. The fourth region includes a seventh edge and an eighth edge. The eighth edge is farther away from the through-hole than the seventh edge. When viewed in a direction perpendicular to the hole axis of the through-hole, the eighth edge is located between the seventh edge and the second wall surface in a direction parallel to the hole axis. The first region and the fourth region can be conveniently formed by stamping the straight peripheral edge of the second part and making the peripheral edge of the second part tilt upward.

In an improved technical solution based on the above technical solution, the electrochemical device further includes a gasket. The gasket connects to a surface of the second sealing ring, the surface of the second sealing ring facing away from the inner cavity. The first part includes a bend portion extending out of the through-hole, and the bend portion is bent toward the gasket.

According to a second aspect, this application further provides an electronic device. The electronic device includes the electrochemical device according to any one of the embodiments of the first aspect.

## BRIEF DESCRIPTION OF DRAWINGS

To describe the technical solutions of the embodiments of this application more clearly, the following outlines the drawings used in the embodiments of this application. Evidently, the drawings outlined below are merely a part of embodiments of this application. A person of ordinary skill in the art may derive other drawings from the outlined drawings.

FIG. 1 is a schematic structural diagram of an electrochemical device according to some embodiments of this application;

FIG. 2 is a partial exploded view of a sealing structure according to some embodiments of this application;

FIG. 3 is a partial exploded view of a conventional sealing structure;

FIG. 4 is a partial exploded view of a sealing structure according to some embodiments of this application;

FIG. 5 is a partial exploded view of a sealing structure according to some embodiments of this application;

FIG. 6 is a partial exploded view of a sealing structure according to some embodiments of this application;

FIG. 7 is a partial exploded view of a sealing structure according to some embodiments of this application; and

FIG. 8 is a partial exploded view of a sealing structure according to some embodiments of this application.

List of reference numerals:

10. housing; 11. inner cavity; 12. cover; 121. first wall surface; 1211. second region; 1211a. third edge; 1211b. fourth edge; 122. second wall surface; 1221. third region; 1221a. fifth edge; 1221b. sixth edge; 13. through-hole; 131. hole axis;

20. first sealing ring; 21. first annular surface; 22. second annular surface; 221. second straight line segment;

30. electrode post; 31. first part; 311. bend portion; 312. snap slot; 32. second part; 321. third annular surface; 3211. first region; 3211a. first edge; 3211b. second edge; 3212. first straight line segment; 33. fourth region; 33a. seventh edge; 33b. eighth edge;

40a. first intersection point; 40b. second intersection point; 40c. third intersection point; 40d. fourth intersection point; 40e. fifth intersection point; 40f. sixth intersection point; 40g. seventh intersection point; 40h. eighth intersection point; 40i. ninth intersection point; 40j. tenth intersection point; 40k. eleventh intersection point; 401. twelfth intersection point;

50. second sealing ring; 51. fourth annular surface; 52. extension portion;

60. gasket.

## DETAILED DESCRIPTION OF EMBODIMENTS

For ease of understanding this application, the following describes this application in more detail with reference to drawings and specific embodiments. It is hereby noted that an element referred to herein as being "fixed to", "fastened to", or "mounted to" another element may be directly disposed on the other element, or may be fixed or fastened to the other element with one or more elements in between. An element referred to herein as "connected to" another element may be connected to the other element directly or with one or more elements in between. The terms "up", "down", "in", "out", and other similar expressions used herein are merely for ease of description.

Unless otherwise defined, all technical and scientific terms used herein bear the same meanings as what is normally understood by a person skilled in the technical field of this application. The terms used in the specification of this application are merely intended to describe specific embodiments but not to limit this application.

In addition, to the extent that no mutual conflict occurs, the technical features described below in different embodiments of this application may be combined with each other.

In this specification, the meanings of "mounting" or "installation" include fixing or confining an element or unit to a specific position or place by welding/soldering, screwing, snap-fit connection, bonding, or other means, where the element or unit may be held stationary in the specific position or place or may move within a limited range, and the element or unit may be detachable or undetachable after being fixed or confined to the specific position or place, without being limited in embodiments of this application.

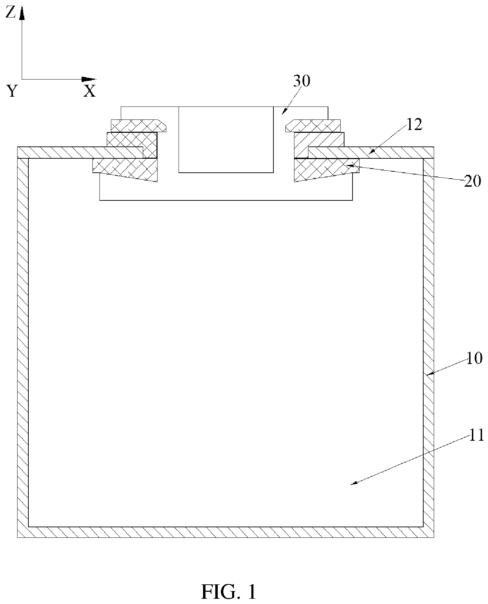

An embodiment of this application discloses an electrochemical device. Referring to FIG. 1, the electrochemical device includes a housing 10, a first sealing ring 20, and an electrode post 30. In this embodiment of this application, the electrochemical device is a smallest unit that makes up a battery or a battery module, and is a site for conversion between electrical energy and chemical energy.

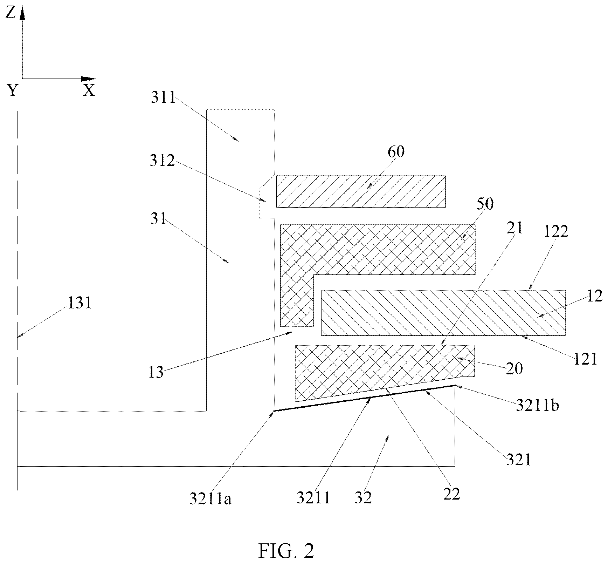

With respect to the housing 10, referring to FIG. 1 and FIG. 2, the electrochemical device further includes an electrode assembly (not shown in the drawing) and an electrolyte solution (not shown in the drawing). An inner cavity 11 is formed in the housing 10. The electrode assembly and the electrolyte solution are accommodated in the inner cavity 11 of the housing 10. The housing 10 includes a cover 12. The cover 12 connects to the top of the housing 10. The cover 12 is provided with a through-hole 13. The through-hole 13 communicates to the inner cavity 11 of the housing 10. The electrode post 30 may be mounted in the through-hole 13. The cover 12 includes a first wall surface 121 and a second wall surface 122 arranged opposite to each other. The first wall surface 121 is facing toward the inner cavity 11 of the housing 10, and the second wall surface 122 is facing away from the inner cavity 11 of the housing 10. In this embodiment, the housing 10 is a structure formed by stamping and cutting a one-layer steel sheet, usually referred to as a steel shell. In other embodiments, the housing 10 may be made of a metal material such as stainless steel, nickel, or copper.

With respect to the first sealing ring 20, referring to FIG. 1 and FIG. 2, the first sealing ring 20 is disposed around the hole axis 131 of the through-hole 13. The first sealing ring 20 is configured to implement sealing between the electrode post 30 and the housing 10. The first sealing ring 20 includes a first annular surface 21 and a second annular surface 22 disposed opposite to each other. The first annular surface 21 connects to the first wall surface 121 of the cover 12. The second annular surface 22 is facing toward the inner cavity 11 of the housing 10.

With respect to the electrode post 30, in this embodiment, the electrode post 30 may serve as a positive lead-out piece of the steel-shell battery. The steel-shell battery differs from an aluminum laminated film battery in that the steel shell includes only one layer, that is, a layer of steel sheet, but the aluminum laminated film is a three-layer structure including a nylon layer, an aluminum layer, and a PP layer. Because the steel shell includes no nylon layer or PP layer, the steel shell itself may be used as a negative electrode, and a positive electrode may be isolated from the steel shell body by dielectric and hermetical riveting.

Referring to FIG. 1 and FIG. 2, the electrode post 30 includes a first part 31 and a second part 32. The first part 31 is inserted into the through-hole 13 of the housing 10. The second part 32 is connected to an end portion of the first part 31, the end portion being located in the inner cavity 11 of the housing 10. The second part 32 in the inner cavity 11 of the housing 10 is configured to be connected to the electrode assembly. The first part 31 includes a bend portion 311 extending out of the through-hole 13. During riveting, the bend portion 311 needs to be bent away from the hole axis 131 to crimp the first sealing ring 20. The second part 32 protrudes beyond the first part 31 along the first direction X so that the electrode post 30 is constrained when the electrode post 30 is inserted into the through-hole 13. The second part 32 of the electrode post 30 includes a third annular surface 321 facing toward the first wall surface 121. The third annular surface 321 includes a first region 3211. The first region 3211 is configured to connect to the second annular surface 22. The first region 3211 includes a first edge 3211a and a second edge 3211b arranged opposite to each other. The second edge 3211b is farther away from the through-hole 13 than the first edge 3211a. When viewed in a direction perpendicular to the hole axis 131 of the through-hole 13 (third direction Y), the second edge 3211b is located between the first edge 3211a and the second wall surface 122 in a direction parallel to the hole axis 131 (second direction Z).

Referring to FIG. 2, along the second direction Z, the second edge 3211b is higher than the first edge 3211a. When the bend portion 311 is bent and rivet-pressed to the first sealing ring 20, the second edge 3211b can play a role in constraining and blocking the first sealing ring 20, thereby suppressing the sliding and dislocation of the first sealing ring 20. In addition, the slope from the first edge 3211a to the second edge 3211b reduces the tangential rivet pressure parallel to the first region 3211, and reduces the assembling sliding between the first sealing ring 20 and the electrode post 30. Moreover, the second edge 3211b being higher than the first edge 3211a suppresses the electrode post 30 from being turned out, increases the distance from the first edge 3211a to the second edge 3211b, increases the sealing area, and increases the normal-direction rivet pressure perpendicular to the first region 3211, thereby improving the sealing reliability of the first sealing ring 20.

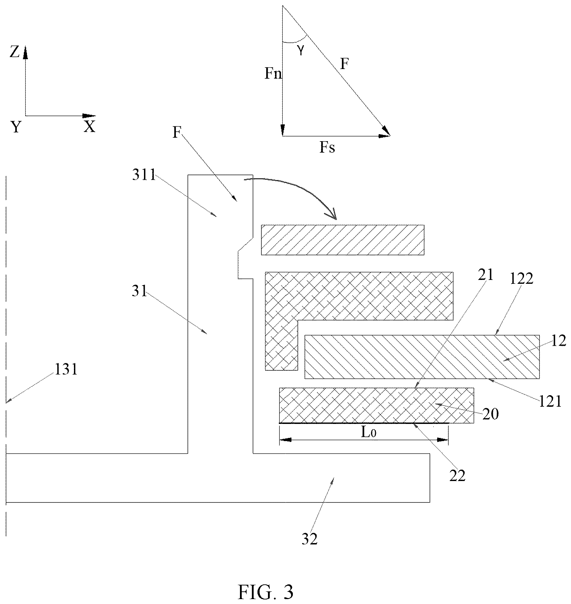

Referring to FIG. 3, FIG. 3 shows a conventional sealing structure of an electrode post 30 in an electrochemical device. During assembling and rivet-pressing, a force F is applied to the bend portion 311 of the first part 31, so that the bend portion 311 bends toward the first sealing ring 20. The length of a connecting region between the first sealing ring 20 and the second part 32 of the electrode post 30 is $L_0$. Because the connecting interface between the first sealing ring 20 and the second part 32 is entirely in a horizontal plane, the oblique rivet pressure F is very likely to cause the first sealing ring 20 to slide, thereby reducing the effective sealing area of the first sealing ring 20. A main reason is that the tangential force $Fs = F \times \sin\gamma$ of the rivet pressure is overly large, where $\gamma$ is a rivet-pressing angle. In addition, the effective normal force $Fn = F \times \cos\gamma$ converted from the oblique rivet pressure F is relatively small. If the rivet pressure is increased, there is a risk of causing the electrode post 30 to turn outward.

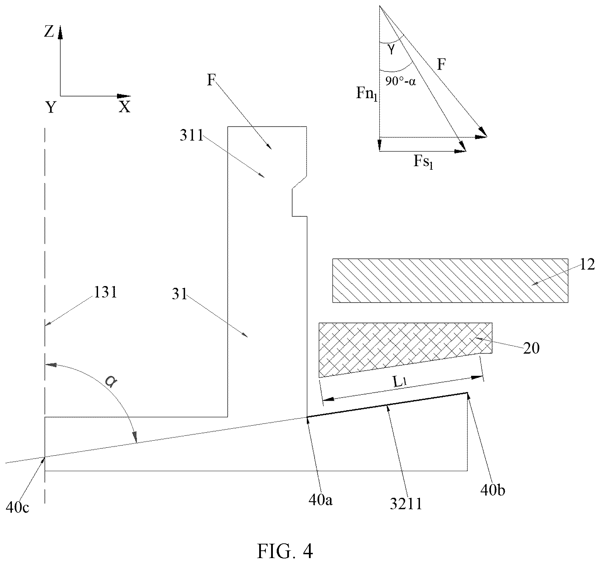

To alleviate the above problem, in an embodiment, referring to FIG. 2 and FIG. 4, the first plane (XZ plane) is a plane passing through the hole axis 131. The first edge 3211a intersects the first plane at a first intersection point 40a. The second edge 3211b intersects the first plane at a second intersection point 40b. A straight line passing through the first intersection point 40a and the second intersection point 40b intersects the hole axis 131 of the through-hole 13 at a third intersection point 40c. Along the direction of the hole axis 131, the angle between the line from the third intersection point 40c to the through-hole 13 and the line from the third intersection point 40c to the second intersection point 40b is $\alpha$, satisfying: $60° \leq \alpha \leq 88°$. In this embodiment, the first region 3211 is a slope, and the electrode post 30 connects to the first sealing ring 20 through the slope. The sealing length between the first sealing ring 20 and the electrode post 30 is $L_1 = L_0/\cos(90° - \alpha)$, that is, $L_1 > L_0$, thereby increasing the sealing area between the first sealing ring 20 and the electrode post 30. In addition, the tangential force on the first sealing ring 20 is $Fs_1 = F \times \sin(90° - \alpha)$, where $(90° - \alpha) < \gamma$, that is, $Fs_1 < Fs$. The tangential force is reduced, thereby effectively reducing the sliding and dislocation of the first sealing ring 20. In addition, because the rivet pressure remains unchanged, the normal force on the first sealing ring 20 is $Fn_1 = F \times \cos(90° - \alpha)$, that is, $Fn_1 > Fn$. With the normal force increased, the pressure on the sealing interface is greater, thereby improving the reliability of sealing between the first sealing ring 20 and the electrode post 30. In some embodiments, in order to further improve the reliability of sealing between the first sealing ring 20 and the electrode post 30, the angle satisfies: $75° \leq \alpha \leq 85°$.

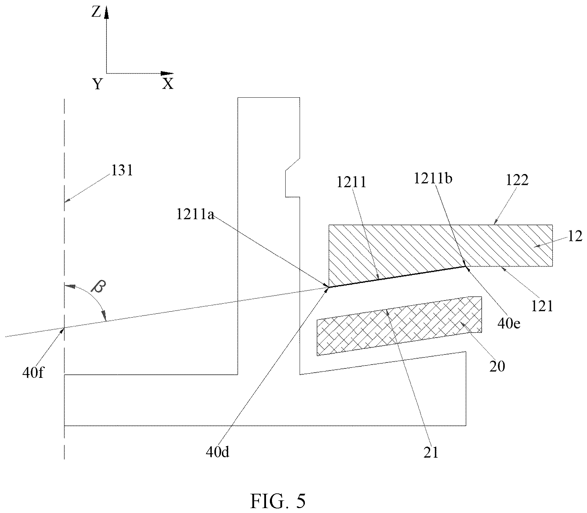

According to some embodiments of this application, referring to FIG. 5, the first wall surface 121 includes a second region 1211 connected to the first annular surface 21. The second region 1211 includes a third edge 1211a and a fourth edge 1211b disposed opposite to each other. The fourth edge 1211b is farther away from the through-hole 13 than the third edge 1211a. The third edge 1211a intersects the first plane at a fourth intersection point 40d. The fourth edge 1211b intersects the first plane at a fifth intersection point 40e. A straight line passing through the fourth intersection point 40d and the fifth intersection point 40e intersects the hole axis 131 at a sixth intersection point 40f. Along the direction of the hole axis 131, the angle between the line from the sixth intersection point 40f to the through-hole 13 and the line from the sixth intersection point 40f to the fifth intersection point 40e is $\beta$, satisfying: $60° \leq \beta \leq 88°$. In this embodiment, the second region 1211 is a slope, and the first sealing ring 20 connects to the cover 12 through the slope, thereby increasing the sealing length between the first sealing ring 20 and the cover 12, and in turn, increasing the sealing area between the first sealing ring 20 and the cover 12. In addition, the tangential force between the cover 12 and the first sealing ring 20 is reduced, and the normal force is increased, thereby further improving the reliability of sealing between the first sealing ring 20 and the cover 12. In some embodiments, in order to further improve the reliability of sealing between the first sealing ring 20 and the cover 12, the angle satisfies: $75° \leq \beta \leq 85°$. In other embodiments, the value range of $\beta$ may be $0.7 \times (90° - \alpha) \leq (90° - (3) \leq 1.2 \times (90° - \alpha)$, that is, the value of $\beta$ may be determined depending on $(1.2\alpha - 18°) \leq \beta \leq (0.7\alpha + 27°)$. In this case, the inclination of the first region 3211 more matches the inclination of the second region 1211, thereby increasing the pressure on the sealing interface between the first sealing ring 20 and the electrode post 30 as well as the sealing interface between the first sealing ring and the cover 12, and in turn, further improving the sealing reliability. Further, in order to improve the sealing effect of the first sealing ring 20, the two angles satisfy $\alpha \leq \beta$. When the angle $\alpha$ is less than the angle $\beta$, the first region 3211 is tilted upward at a larger angle, so that the second part 32 of the electrode post 30 can abut and constrain the first sealing ring 20 conveniently.

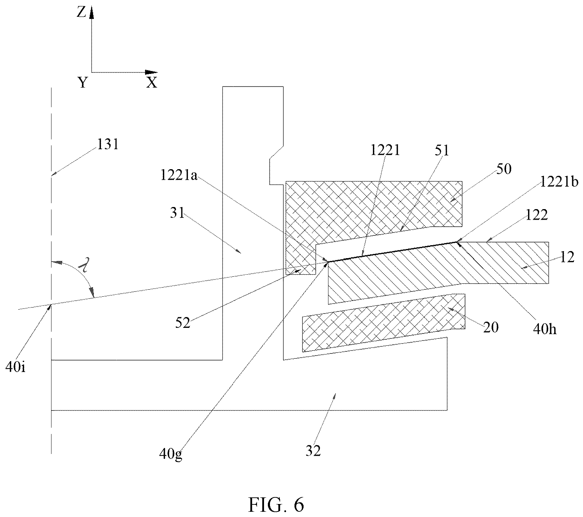

According to some embodiments of this application, referring to FIG. 6, the electrochemical device further includes a second sealing ring 50. The second sealing ring 50 is sleeved around the end portion of the first part 31, the end portion facing away from the second part 32. The second sealing ring 50 includes a fourth annular surface 51, and the second wall surface 122 includes a third region 1221 connected to the fourth annular surface 51. The third region 1221 includes a fifth edge 1221a and a sixth edge 1221b that are disposed opposite to each other. The sixth edge 1221b is farther away from the through-hole 13 than the fifth edge 1221a. The fifth edge 1221a intersects the first plane at a seventh intersection point 40g. The sixth edge 1221b intersects the first plane at an eighth intersection point 40h. A straight line passing through the seventh intersection point 40g and the eighth intersection point 40h intersects the hole axis 131 at a ninth intersection point 40i. Along the direction of the hole axis 131, the angle between the line from the ninth intersection point 40i to the second sealing ring 50 and the line from the ninth intersection point 40i to the eighth intersection point 40h is $\lambda$, satisfying: $60° \leq \lambda \leq 88°$. The first sealing ring 20 is configured to isolate and seal the inner wall of the cover 12 from the electrode post 30. The second sealing ring 50 is configured to isolate and seal the cover 12 from the electrode post 30 on the outer surface of the cover 12. The second sealing ring 50 further includes an extension portion 52. The extension portion 52 extends into the through-hole 13, and abuts between the first part 31 and the cover 12 to isolate the first part 31 from the cover 12. When the bend portion 311 is bent and rivet-pressed to the second sealing ring 50, the extension portion 52 can also constrain the second sealing ring 50 to alleviate the sliding and dislocation of the second sealing ring 50 caused by the rivet-pressing. Optionally, the extension portion 52 is also disposed on the first sealing ring 20.

In this embodiment, the third region 1221 is a slope, and the second sealing ring 50 connects to the cover 12 through the slope, thereby increasing the sealing length between the second sealing ring 50 and the cover 12, and in turn, increasing the sealing area between the second sealing ring 50 and the cover 12. In addition, the tangential force between the cover 12 and the second sealing ring 50 is reduced, and the normal force is increased, thereby further improving the reliability of sealing between the second sealing ring 50 and the cover 12. In some embodiments, the angle satisfies: $(1.2\alpha - 18°) \leq \lambda \leq (0.7\alpha + 27°)$. In order to facilitate the third region 1221 to abut and constrain the second sealing ring 50, the angle $\lambda$ may be set to be less than the angle $\beta$.

According to some embodiments of this application, the first region 3211 is an annular region surrounding the hole axis 131, the first edge 3211a is an inner circle of the annular region, and the second edge 3211b is an outer circle of the annular region. In this embodiment, the first region 3211 around the first part 31 is an upward inclined slope. No matter in which direction the bend portion 311 is bent and rivet-pressed, the second edge 3211b can constrain the first sealing ring 20. In actual operation, the bend portion 311 is usually bent away from the hole axis 131. Therefore, in some optional embodiments, on just one side in the bending direction of the bend portion 311, when viewed in a direction perpendicular to the hole axis 131, the second edge 3211b is located between the first edge 3211a and the second wall surface 122 in a direction parallel to the hole axis 131.

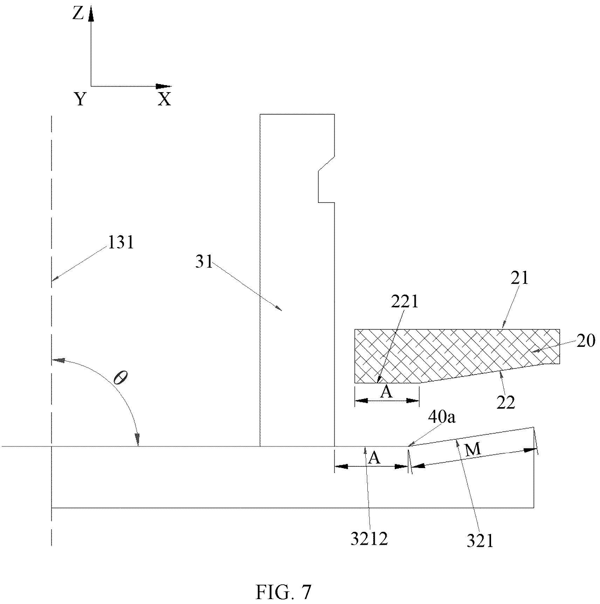

Referring to FIG. 7, optionally, a cross-section of the third annular surface 321 at the first plane includes a first line. The first line includes a first straight line segment 3212. The first straight line segment 3212 connects the first intersection point 40a and the first part 31. An angle between the first straight line segment 3212 and the hole axis 131 is θ, satisfying: $89° \leq \theta \leq 91°$. The length of the first line is L, and the length of the first straight line segment 3212 is A, satisfying: $A \leq 0.7L$. The sealing structure between the second part 32 of the electrode post 30 and the first sealing ring 20 may be a pure-slope sealing structure or a plane plus slope sealing structure. The length of the plane, that is, the first straight line segment 3212 is A, and the length of the slope is M, satisfying: $L = A + M$. The line of the second annular surface 22 connected to the third annular surface 321 in this cross-section includes a second straight line segment 221. The second straight line segment 221 connects to the first straight line segment 3212. The length of the second straight line segment 221 may be denoted as A.

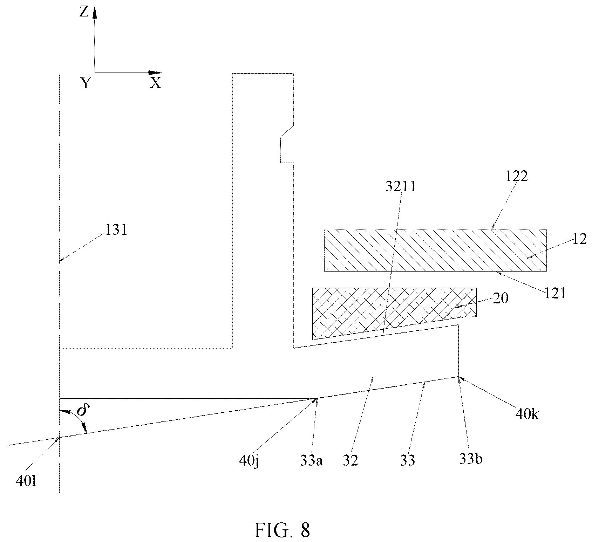

According to some embodiments of this application, referring to FIG. 8, the second part 32 further includes a fourth region 33 disposed opposite to the first region 3211. The fourth region 33 is facing toward the inner cavity 11 of the housing 10. The fourth region 33 includes a seventh edge 33a and an eighth edge 33b. The eighth edge 33b is farther away from the through-hole 13 than the seventh edge 33a. When viewed in a direction perpendicular to the hole axis 131 of the through-hole 13, the eighth edge 33b is located between the seventh edge 33a and the second wall surface 122 in a direction parallel to the hole axis 131. By stamping the straight peripheral edge of the second part 32 and making the peripheral edge of the second part 32 tilt upward, the fourth region 33 at the bottom of the electrode post 30 is made to be a slope, thereby facilitating formation of the first region 3211 and the fourth region 33, and reducing consumption of material of the electrode post 30 and reducing cost.

The seventh edge 33a intersects the first plane at a tenth intersection point 40j. The eighth edge 33b intersects the first plane at an eleventh intersection point 40k. An other straight line intersects the hole axis 131 at a twelfth intersection point 40l, where the other straight line passes through the tenth intersection point 40j and the eleventh intersection point 40k. Along the direction of the hole axis 131, an angle between a line from the twelfth intersection point 40l to the through-hole 13 and a line from the twelfth intersection point 40l to the eleventh intersection point 40k is δ, satisfying: $60° \leq \delta \leq 88°$. In some embodiments, $\delta \leq \alpha$.

According to some embodiments of this application, referring to FIG. 2, the electrochemical device further includes a gasket 60. The gasket 60 connects to a surface of the second sealing ring 50, the surface of the second sealing ring facing away from the inner cavity 11. The bend portion 311 is bent toward the gasket 60. The gasket 60 can protect the second sealing ring 50 to prevent the second sealing ring 50 from being directly rivet-pressed and damaged by the bend portion 311. Optionally, the first part 31 is provided with a snap slot 312. The gasket 60 can be directly snap-fastened into the snap slot 312, thereby making it convenient to position and mount the gasket 60 on the one hand, and convenient to bend the bend portion 311 on the other hand.

In these embodiments of this application, the first region 3211 is a set to be a slope, and the electrode post 30 connects to the first sealing ring 20 through the slope, thereby increasing the sealing area between the first sealing ring 20 and the electrode post 30. Similarly, the tangential force exerted on the first sealing ring 20 is reduced, thereby effectively reducing the sliding and dislocation of the first sealing ring 20. Moreover, the normal force exerted on the first sealing ring 20 is increased, and the pressure on a sealing interface between the first sealing ring 20 and the electrode post 30 is greater, thereby improving the sealing reliability of the first sealing ring 20. Based on the same inventive concept, the cover 12 connects to the first sealing ring 20 through a slope, and the second sealing ring 50 connects to the cover 12 through a slope. The connection implemented through the three slopes can further improve the reliability of the sealing of the electrode post 30.

The sealing effect is tested by using a steel-shell lithium-ion battery as an example. Both sides of the cover of the steel-shell lithium-ion battery are planar structures. A rivet pressure is applied in a direction that is at an angle of 45° to the hole axis direction during the rivet-pressing. The sealing length L between the first sealing ring 20 on one side of the electrode post 30 and the second part 32 of the electrode post 30 is 2 mm. Examples 1 to 8 differ from Comparative Example 1 in that the peripheral edge of the second part 32 of the electrode post 30 is bent upward in full or in part by stamping, so as to form a pure-slope sealing structure or a plane plus slope sealing structure. The length of the plane region is A. The method for verifying the sealing effect is to store a steel-shell lithium-ion battery in a 60 °C high temperature and 90% relative humidity environment for 7 days. If there is no rupture or leakage occurs, the battery passes the test without failure. If any rupture or leakage occurs, the battery fails the test. The number of specimens of the steel-shell lithium-ion battery in each test is set to 5. The failure rate is required to be 20% or less. The test results are shown in Table 1 below.

**Table 1 Test data of different sealing structures and dimensions**

| | Sealing structure | A | Angle $\alpha$ | Number of specimens | Number of failed specimens | Failure rate |
|---|---|---|---|---|---|---|
| Example 1 | Pure slope | 0 | 85° | 5 | 0 | 0% |
| Example 2 | Plane + slope | 0.1L | 85° | 5 | 0 | 0% |
| Example 3 | Plane + slope | 0.3L | 85° | 5 | 0 | 0% |
| Example 4 | Plane + slope | 0.5L | 85° | 5 | 0 | 0% |
| Example 5 | Plane + slope | 0.7L | 85° | 5 | 1 | 20% |
| Example 6 | Pure slope | 0 | 88° | 5 | 1 | 20% |
| Example 7 | Pure slope | 0 | 75° | 5 | 0 | 0% |
| Example 8 | Pure slope | 0 | 60° | 5 | 1 | 20% |
| Comparative Example 1 | Pure plane | L | 90° | 5 | 2 | 40% |

The test results show that the steel-shell lithium-ion battery that employs a pure slope sealing structure or a plane plus slope sealing structure exhibits a relatively good sealing effect and a relatively low failure rate when stored in a high temperature and high humidity environment. By contrast, the steel-shell lithium-ion battery that employs a conventional pure-plane sealing structure exhibits a relatively high failure rate and fails to meet the requirements.

As can be further seen from the corresponding test results in Table 1, when the width A of the plane region satisfies $A \leq 0.5L$ and the angle satisfies $75° \leq \alpha \leq 85°$, the failure rate of steel-shell lithium-ion batteries stored in a high temperature and high humidity environment is further significantly reduced, and the sealing performance is significantly improved. Therefore, the sealing reliability of the steel-shell lithium-ion batteries with A and $\alpha$ falling within the specified ranges is obviously superior.

An embodiment of this application further discloses an electronic device. The electronic device includes the electrochemical device disclosed in any one of the above embodiments.

An embodiment of this application provides an electronic device that uses an electrochemical device as a power supply. The electronic device may be, but is not limited to, a Bluetooth headset, mobile phone, tablet, laptop computer, electric toy, electric tool, electric power cart, electric vehicle, ship, spacecraft, or the like. The electric toy may include stationary or mobile electric toys, such as game console, electric car toy, electric ship toy, electric airplane toy, and the like. The spacecraft may include airplane, rocket, space shuttle, spaceship, and the like.

Finally, it is hereby noted that the foregoing embodiments are merely intended to describe the technical solutions of this application but not to limit this application. Based on the concept of this application, the technical features in the foregoing embodiments or different embodiments may be combined, the steps may be implemented in any order, and many variations may be made to this application in different aspects, which, for brevity, are not provided in detail. Although this application has been described in detail with reference to the foregoing embodiments, a person of ordinary skill in the art understands that modifications may still be made to the technical solutions described in the foregoing embodiments, or equivalent replacements may still be made to some technical features in the technical solutions. Such modifications and replacements do not make the essence of the corresponding technical solutions depart from the scope of the technical solutions of the embodiments of this application.

**Claims**

1. An electrochemical device, **characterized in that** the electrochemical device comprises:

   a housing, comprising a cover provided with a through-hole, wherein the cover comprises a first wall surface and a second wall surface disposed opposite to each other, and the first wall surface is facing toward an inner cavity of the housing;
   a first sealing ring, comprising a first annular surface and a second annular surface disposed opposite to each other, wherein the first annular surface connects to the first wall surface, and the first sealing ring is disposed around a hole axis of the through-hole; and
   an electrode post, comprising a first part and a second part, wherein the first part is inserted into the through-hole, and the second part is connected to an end portion of the first part, the end portion being located in the inner cavity of the housing; and the second part comprises a third annular surface facing toward the first wall surface, wherein

the third annular surface comprises a first region connected to the second annular surface, the first region comprises a first edge and a second edge disposed opposite to each other, and the second edge is farther away from the through-hole than the first edge; and, when viewed in a direction perpendicular to the hole axis of the through-hole, the second edge is located between the first edge and the second wall surface in a direction parallel to the hole axis.

2.  The electrochemical device according to claim 1, **characterized in that** the first edge intersects a first plane at a first intersection point, the second edge intersects the first plane at a second intersection point, and a straight line intersects the hole axis at a third intersection point, wherein the straight line passes through the first intersection point and the second intersection point; along a direction of the hole axis, an angle between a line from the third intersection point to the through-hole and a line from the third intersection point to the second intersection point is $\alpha$, satisfying: $60° \leq \alpha \leq 88°$, and the first plane is a plane passing through the hole axis.

3.  The electrochemical device according to claim 2, **characterized in that** the angle $\alpha$ satisfies: $75° \leq \alpha \leq 85°$.

4.  The electrochemical device according to claim 2, **characterized in that** the first wall surface comprises a second region connected to the first annular surface, the second region comprises a third edge and a fourth edge disposed opposite to each other, and the fourth edge is farther away from the through-hole than the third edge; and
    the third edge intersects the first plane at a fourth intersection point, the fourth edge intersects the first plane at a fifth intersection point, and an other straight line intersects the hole axis at a sixth intersection point, wherein the other straight line passes through the fourth intersection point and the fifth intersection point; along a direction of the hole axis, an angle between a line from the sixth intersection point to the through-hole and a line from the sixth intersection point to the fifth intersection point is $\beta$, satisfying: $60° \leq \beta \leq 88°$.

5.  The electrochemical device according to claim 4, **characterized in that** the angle $\beta$ satisfies: $75° \leq \beta \leq 85°$.

6.  The electrochemical device according to claim 4, **characterized in that**

$$(1.2\alpha - 18°) \leq \beta \leq (0.7\alpha + 27°).$$

7.  The electrochemical device according to claim 6, **characterized in that** $\alpha \leq \beta$.

8.  The electrochemical device according to claim 3, **characterized in that** the electrochemical device further comprises a second sealing ring, and the second sealing ring is sleeved around an end portion of the first part, the end portion being facing away from the second part;

    the second sealing ring comprises a fourth annular surface, the second wall surface comprises a third region connected to the fourth annular surface, the third region comprises a fifth edge and a sixth edge disposed opposite to each other, and the sixth edge is farther away from the through-hole than the fifth edge; and
    the fifth edge intersects the first plane at a seventh intersection point, the sixth edge intersects the first plane at an eighth intersection point, and an other straight line intersects the hole axis at a ninth intersection point, wherein the other straight line passes through the seventh intersection point and the eighth intersection point; along a direction of the hole axis, an angle between a line from the ninth intersection point to the second sealing ring and a line from the ninth intersection point to the eighth intersection point is $\lambda$, satisfying: $60° \leq \lambda \leq 88°$.

9.  The electrochemical device according to claim 2, **characterized in that** the electrochemical device satisfies at least one of the following conditions:

    (1) the first region is an annular region surrounding the hole axis, the first edge is an inner circle of the annular region, and the second edge is an outer circle of the annular region; or
    (2) a cross-section of the third annular surface and the first plane comprises a first line, the first line comprises a first straight line segment, the first straight line segment connects the first intersection point and the first part, and an angle between the first straight line segment and the hole axis is $\theta$, satisfying: $89° \leq \theta \leq 91°$; a length of the first line is L, and a length of the first straight line segment is A, satisfying: A < 0.7L.

10. The electrochemical device according to claim 1, **characterized in that** the second part further comprises a fourth region disposed opposite to the first region, and the fourth region is facing toward the inner cavity of the housing; and

the fourth region comprises a seventh edge and an eighth edge, and the eighth edge is farther away from the through-hole than the seventh edge; and, when viewed in a direction perpendicular to the hole axis of the through-hole, the eighth edge is located between the seventh edge and the second wall surface in a direction parallel to the hole axis.

11. The electrochemical device according to claim 8, **characterized in that** the electrochemical device further comprises a gasket, and the gasket is disposed on a surface of the second sealing ring, the surface of the second sealing ring facing away from the inner cavity; and
the first part comprises a bend portion extending out of the through-hole, and the bend portion is bent toward the gasket.

12. An electronic device, **characterized in that** the electronic device comprises the electrochemical device according to any one of claims 1 to 11.

FIG. 1

Z

Y    X

311

312

31

131

13

60

50

21    122

12

121

20

3211b

321

3211a    3211    32    22

FIG. 2

FIG. 3

FIG. 4

FIG. 5

FIG. 6

FIG. 7

FIG. 8

## INTERNATIONAL SEARCH REPORT

| International application No. |
| --- |
| **PCT/CN2022/089925** |

**A.    CLASSIFICATION OF SUBJECT MATTER**

H01M 50/172(2021.01)i;  H01M 50/552(2021.01)i;  H01M 50/184(2021.01)i

According to International Patent Classification (IPC) or to both national classification and IPC

**B.    FIELDS SEARCHED**

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

CNABS; CNTXT; WPABS; DWPI; VEN; ENTXT; CNKI: 电池, 盖, 密封圈, 极柱, 端子, 斜面, 凸起, battery, cover, sealing ring, pole, terminal, bevel, bulge

**C.    DOCUMENTS CONSIDERED TO BE RELEVANT**

| Category* | Citation of document, with indication, where appropriate, of the relevant passages | Relevant to claim No. |
| --- | --- | --- |
| X | CN 212366065 U (DONGGUAN TAFEL NEW ENERGY TECHNOLOGY CO., LTD. et al.) 15 January 2021 (2021-01-15) description, paragraphs 2 and 35-60, and figures 1-11 | 1-12 |
| X | CN 112820988 A (DONGGUAN TAFEL NEW ENERGY TECHNOLOGY CO., LTD. et al.) 18 May 2021 (2021-05-18) description, paragraphs 2 and 49-66, and figures 1-8 | 1-12 |
| X | CN 103378343 A (BYD CO., LTD.) 30 October 2013 (2013-10-30) description, paragraphs 2 and 43-66, and figures 1-8 | 1-12 |
| X | CN 214898631 U (SHENZHEN KDL INDUSTRY CO., LTD.) 26 November 2021 (2021-11-26) description, paragraphs 32-56, and figures 1-4 | 1-12 |
| X | CN 1512605 A (MATSUSHITA ELECTRIC INDUSTRIAL CO., LTD.) 14 July 2004 (2004-07-14) description, page 3, the fourth-to-last paragraph to page 6, paragraph 3, and figures 1(A)-6 | 1-12 |
| A | CN 103945955 A (TOYOTA MOTOR CORP.) 23 July 2014 (2014-07-23) entire document | 1-12 |

☑ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **14 January 2023** | **19 January 2023** |

| Name and mailing address of the ISA/CN | Authorized officer |
| --- | --- |
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

| International application No. |
| --- |
| **PCT/CN2022/089925** |

**C. DOCUMENTS CONSIDERED TO BE RELEVANT**

| Category* | Citation of document, with indication, where appropriate, of the relevant passages | Relevant to claim No. |
| --- | --- | --- |
| A | JP 2008192552 A (TOYOTA MOTOR CORP.) 21 August 2008 (2008-08-21)<br>entire document | 1-12 |

Form PCT/ISA/210 (second sheet) (January 2015)

**INTERNATIONAL SEARCH REPORT**
Information on patent family members

International application No.

**PCT/CN2022/089925**

| Patent document cited in search report | | | Publication date (day/month/year) | Patent family member(s) | | | Publication date (day/month/year) |
|---|---|---|---|---|---|---|---|
| CN | 212366065 | U | 15 January 2021 | WO | 2021218844 | A1 | 04 November 2021 |
| CN | 112820988 | A | 18 May 2021 | CN | 214411343 | U | 15 October 2021 |
| | | | | WO | 2022156090 | A1 | 28 July 2022 |
| CN | 103378343 | A | 30 October 2013 | WO | 2013000415 | A1 | 03 January 2013 |
| | | | | KR | 20140040835 | A | 03 April 2014 |
| | | | | US | 2014106209 | A1 | 17 April 2014 |
| | | | | EP | 2727174 | A1 | 07 May 2014 |
| | | | | JP | 2014523076 | A | 08 September 2014 |
| | | | | KR | 101589838 | B1 | 28 January 2016 |
| | | | | JP | 5941143 | B2 | 29 June 2016 |
| | | | | EP | 2727174 | B1 | 23 August 2017 |
| | | | | US | 10109839 | B2 | 23 October 2018 |
| CN | 214898631 | U | 26 November 2021 | CN | 113097615 | A | 09 July 2021 |
| CN | 1512605 | A | 14 July 2004 | US | 2003104276 | A1 | 05 June 2003 |
| | | | | EP | 1318554 | A2 | 11 June 2003 |
| | | | | KR | 20030045662 | A | 11 June 2003 |
| | | | | JP | 2003173767 | A | 20 June 2003 |
| | | | | TW | 200411964 | A | 01 July 2004 |
| | | | | TW | I239111 | B | 01 September 2005 |
| | | | | US | 7029790 | B2 | 18 April 2006 |
| | | | | CN | 1307731 | C | 28 March 2007 |
| CN | 103945955 | A | 23 July 2014 | WO | 2013076555 | A2 | 30 May 2013 |
| | | | | EP | 2782691 | A2 | 01 October 2014 |
| | | | | US | 2014295259 | A1 | 02 October 2014 |
| | | | | JP | 2013114799 | A | 10 June 2013 |
| | | | | KR | 20140084237 | A | 04 July 2014 |
| | | | | JP | 5447492 | B2 | 19 March 2014 |
| | | | | EP | 2782691 | B1 | 29 April 2015 |
| | | | | US | 9960407 | B2 | 01 May 2018 |
| | | | | CN | 103945955 | B | 11 May 2016 |
| | | | | KR | 101586597 | B1 | 18 January 2016 |
| JP | 2008192552 | A | 21 August 2008 | | None | | |

Form PCT/ISA/210 (patent family annex) (January 2015)